# EUROPEAN PATENT SPECIFICATION

(11) **EP 1 639 682 B1**
(45) Date of publication and mention of the grant of the patent: **02.01.2008**
(21) Application number: 04729784.1
(22) Date of filing: 27.04.2004
(51) Int. Cl.: H02G 3/22, F16L 5/02

(54) **COVER MEANS**
ABDECKMITTEL
MOYENS DE COUVERTURE

(30) Priority: 30.04.2003 SE 0301258
(43) Date of publication of application: 29.03.2006
(73) Proprietor: Roxtec AB, 371 23 Karlskrona (SE)
(72) Inventor: KREUTZ, Tomas, SE-371 64 Lyckeby (SE)
(74) Representative: Karlsson, Leif Gunnar Börje
(86) International application number: PCT/SE2004/000639
(87) International publication number: WO 2004/098010

(56) References cited:
- EP-A2- 0 392 266
- US-A- 4 642 418
- US-A- 4 919 372
- US-A- 5 297 691
- US-A1- 2001 037 835

## Description

### Technical Field

The present invention concerns a cover means. The cover means is intended for use at frames for cable entries, pipe penetrations etc.

### Prior Art

In frames receiving pipe penetrations, cable entries etc. a large number of cables, pipes etc are often received. In order to enable retrofit of cables, pipes or the like oversized frames are often used, where the spaces not occupied is blocked by suitable means.

The pipe penetrations, cable entries etc. often have the form of modules used together with one or more compression means, to give a tight sealing. Larger frames are often divided into several smaller compartments, in which each compartment comprises at least one compression means.

EP-A2-0 392 266 relates to a device for sealing a sleeve hole. This closure is intended to be either intrinsically completely sealed or to facilitate sealed insertions of elongated objects, especially of cables. This is achieved with the aid of a tube sealing ring, arranged in the sleeve hole, on the one hand and with a matching element, for sealing with respect to the inserted object, on the other hand, which matching element is coupled in a sealed manner to the inserted tube sealing ring.

### Summary of the Invention

One principle for this invention is to be able to block or cover relatively large areas of a frame for cable entries, pipe penetrations etc. Cover means of this type are often used to block a complete compartment of the frame.

If, after mounting of the frame, cables or pipes are to be retrofitted, suitable modules may replace the cover means of the present invention. Thus, the use of cover means enhances the flexibility of the frame. If a cover means, e.g. according to the present invention, is not used a retrofit of cables, pipes etc. would only be possible with laborious efforts. In such a case possibly a new, larger frame has to be mounted demanding an increased space.

According to the invention a cover means to be received in a frame for pipe penetrations, cable entries etc. is furnished. The cover means comprises a plate. It further comprises locking means and sealing means.

The design and material of the plate, locking means and sealing means forming the cover means may vary, depending on demands and requirements in each specific case. Furthermore, the cover means may include further parts, such as fire insulation.

Further objects and advantages of the present invention will be obvious to a person skilled in the art when reading the detailed description below of at present preferred embodiments.

### Brief Description of the Drawings

The invention will be explained further below with reference to the enclosed drawings. In the drawings different embodiments of cover means according to the present invention are shown by way of example. In the drawings:
Fig. 1 is a perspective view of a part of a cover means according to the present invention;
Fig. 2 is a perspective view of a further part of a cover means according to the present invention;
Fig. 3 is a perspective view of still a further part of a cover means according to the present invention;
Fig. 4 is an end view of a cover means according to the present invention and including the parts of the previous Figs.;
Fig. 5 is a cross sectional view of the cover means of Fig. 4 mounted in a frame;
Fig. 6 is a plan view of the cover means and frame of Fig. 5;
Fig. 7 is a perspective view of a further embodiment for a cover means according to the present invention;
Fig. 8 is a cross sectional view of the cover means of Fig. 7;
Fig. 9 is a perspective view of yet an embodiment for a cover means according to the present invention; and
Fig. 10 is a perspective view of a variant of the embodiment of Fig. 9.

### Detailed Description of Preferred Embodiments

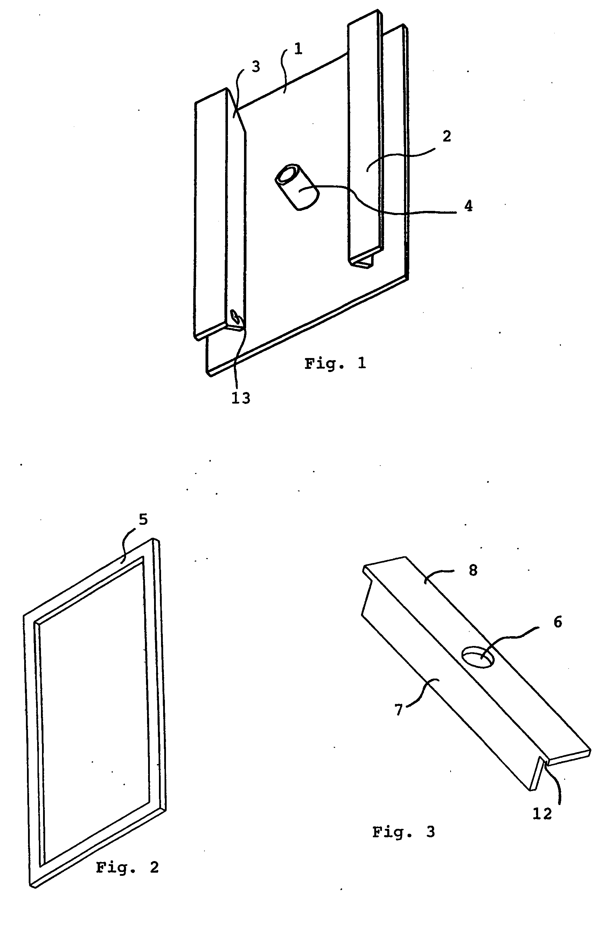

In Fig. 1 a plate 1 is shown forming the base for a cover means according to the present invention. The plate 1 has a rectangular shape. A person skilled in the art realises that in other embodiments the plate 1 has other shapes, depending on the intended use. Thus, the plate may be square, triangular or any other polygonal shape and it may also be round or having rounded parts. Two L-shaped flanges are formed along the long sides of the plate 1. Each flange comprises a horizontal part 2 and a vertical part 3. The terms "horizontal", "vertical" and similar expressions are in relation to the plate 1, in the position as shown in Fig. 1. Thus, "horizontal" could also be expressed as parallel with the plate 1 and "vertical" as perpendicular to the plate 1. A person skilled in the art realises that in use the plate 1 may have any orientation.

As shown in Fig. 1 the free edge of the horizontal part 2 of the flange is directed towards the long sides of the plate 1. The outer free edge of each horizontal part 2 of each flange is positioned in a vertical plane inside the edge of the adjacent long side of the plate 1. Also the short ends of the horizontal part 2 are positioned in a vertical plane inside the edge of the adjacent short side of the plate 1. The distances between the free ends of the horizontal parts 2 of the flanges and the adjacent sides of the plate 1 are relatively small. Said distances should be large enough to admit proper mounting but at the same time hinder the plate 1 from moving too much in a horizontal plane. A person skilled in the art realises that any parts giving the same function may replace the L-shaped flanges. Thus, in other embodiments the flanges are formed of bars having a cross section being rectangular, circular, polygonal etc. The guiding means may also be studs, pins, pegs, taps etc. placed at the corners of the plate 1. The guiding means may also be a combination of the above.

In the shown embodiment the edges of the vertical part 3 of the flanges are inclined. The inclination is directed towards the centre of the plate 1 in the downward direction, i.e. the dimension of each vertical part 3 is larger at the horizontal part 2 than at the plate 1. An opening 13 is arranged at the area of one inclination of one of the vertical parts 3 of the flange. The opening 13 is arranged to facilitate the handling and treatment of the plate 1, and has nothing to do with the covering function of the plate 1.

Approximately at the centre of the plate 1 a bolt connection 4 is arranged. The bolt connection 4 is arranged on the same side of the plate 1 as the flanges. The bolt connection 4 has a tubular form and is furnished with an inner thread. The inner thread of the bolt connection 4 is to receive and co-operate with a thread of a bolt 9.

In the shown embodiment both the flanges and the bolt connection 4 are fixed to the plate 1 by means of welds. A person skilled in the art realises that the flanges and the bolt connection 9 may be attached to the plate 1 in any suitable way using soldering, glue, etc. In other embodiments the flanges and/or the bolt connection 9 may be integrated parts of the plate 1.

At the outer periphery of the plate 1 a sealing means 5 is arranged. The sealing means 5 is arranged on the same side of the plate 1 as the flanges 2, 3 and the bolt connection 4, and goes all the way around the plate 1. If an EMC (electromagnetic compatibility) protection is needed the sealing means 5 is made of a conductive material, such as conductive rubber.

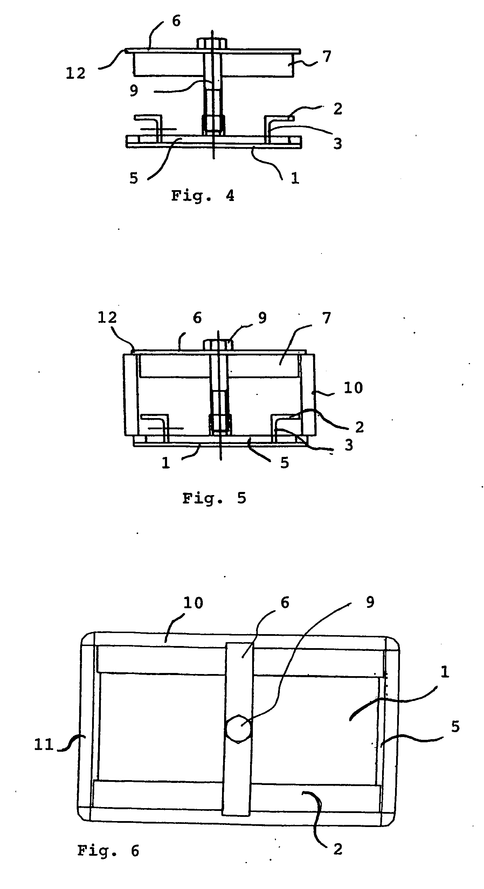

Furthermore, the cover means according to the present invention comprises a locking element having an L-form. The locking element has one part 7, being vertical as shown in Fig. 3 and another part 8, being horizontal as shown in Fig. 3. At normal use the horizontal part 8 of the locking element is parallel with the plate 1. The vertical part 7 is somewhat shorter than the horizontal part 8. Thus, the horizontal part 8 has a projecting free end 12 at each end. An opening 6 is formed in the middle of the horizontal part 8, which opening 6 is to receive the bolt 9 also received in the bolt connection 4 of the plate 1. A person skilled in the art realises that the exact form of the locking element may vary. The only restriction being that it should give a sufficient locking effect.

The cover means is to be received in a frame, normally being more or less rectangular. The frame has two long sides 10 and two short sides 11. The flanges 2, 3 of the plate 1 are to guide the plate 1 in the frame. Furthermore, the flanges 2, 3 hinder the plate 1 from being slid so far sideways that it may fall down through the frame 10, 11. As indicated above the form of the flanges or other guiding means may vary as long as they fulfil the requested function.

In use the cover means is mounted in a frame 10, 11. In such mounting the plate 1 is first placed covering an opening of the frame. The plate 1 should be big enough to cover the opening of the frame and the flanges 2, 3 of the plate 1 should fit inside the frame. The distances between the free ends of the horizontal parts 2 of the flanges and the sides 10, 11 of the frame should be small enough to guarantee the proper positioning of the plate 1. The sealing means 5 is placed on top of the sides 10, 11 of the frame, to form a sealing means at mounting. Then the locking element is placed on the opposite side of the frame, with the projecting free ends 12 of the horizontal part 8 resting on top of the long sides 10 of the frame. The locking element is placed in such a position that the opening 13 of the locking element is placed in line with the bolt connection 4 of the plate 1. Finally the bolt 9 is brought down through the opening 13 of the locking element and into the bolt connection 4 of the plate 1. The bolt 9 is then tightened to give a stable and sealed mounting of the cover means to the frame.

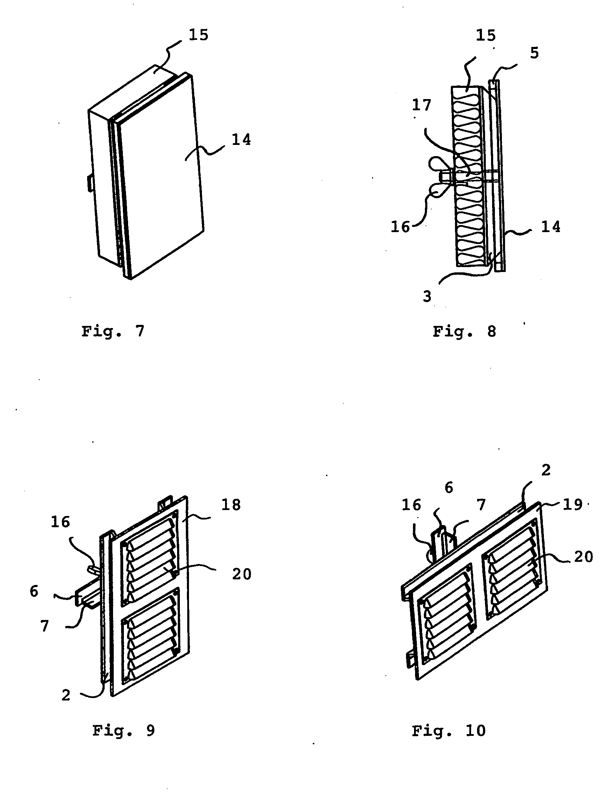

In Figs. 7 and 8 a further embodiment of the invention is shown. Only the parts that differ from the previous embodiments will be discussed here. This embodiment is fire insulated in that a layer of fire insulation 15 is placed on the inside of a plate 14. In this embodiment the locking means comprises a wing nut 16 and a bolt 17. The bolt 17, replacing the bolt connection 4 of the previous embodiments, is fixed to or integrated with the plate 14. The wing nut 16 is received in a threaded connection on the bolt 17. A person skilled in the art realises that the wing nut 16 is only shown as one example, the nut may have many different designs. Irrespective of if a bolt connection 4 or a bolt 17 fixed to the plate 14 are used similar fixation principles applies.

Normally, the layer of fire insulation 15 is fixed to the inside of the plate 14 or rather the horizontal parts 2 of the flanges by gluing or the like. However, it is also possible to just hold the layer of fire insulation 15 in place between the plate 14 and the locking element 7, 8 without any fixation. The fire insulation 15 may be made of any fire insulating material.

In Figs. 9 and 10 two further and related embodiments are shown. Also here only the parts differing from previous embodiments will be discussed. In these embodiments the plates are ventilated plates 18, 19, having two parts of slats 20 partly covering openings giving ventilation. Extra ventilation is beneficial in many cases. The difference between the two embodiments shown is that in one embodiment (Fig. 9) the two parts of slats 20 are placed one above the other, while in the other embodiment (Fig. 10) the parts of slats 20 are placed side by side. The number and form of the parts of slats 20 may vary further between different embodiments. On the inside of the plate 18, 19 a mosquito net (not shown) or a net hindering any other insects is often placed.

A person skilled in the art realises that the different embodiments shown may be combined in many different ways.

If at a later stage the area covered by the cover means is to be used, the cover means is taken out. When the cover means have been taken out suitable modules including compression means may be mounted in the frame.

## Claims

1. A cover means to be received in a frame (10, 11) holding pipe penetrations, cable entries etc., **characterized in that** it comprises a plate (1, 14, 18, 19), locking means (7, 8), which locking means (7, 8) locks the cover means at the frame (10, 11), and sealing means (5) and that the plate (1, 14, 18, 19) comprises guiding means on one side, guiding the plate (1, 14, 18, 19) in relation to the frame (10, 11) in such a way that the plate (1, 14, 18, 19) covers an opening of the frame (10, 11).

2. The cover means of claim 1, **characterized in that** the sealing means (5) is to be positioned along each edge of the plate (1).

3. The cover means of claim 2, **characterized in that** the guiding means are flanges (2, 3) arranged adjacent and parallel with two opposing edges of the plate (1) and/or other parts arranged adjacent the corners of the plate (1); that each flange is L-shaped, having one part (2) parallel with the plate (1, 14, 18, 19) and one part (3) perpendicular to the plate (1, 14, 18, 19), whereby the part (3) being perpendicular to the plate (1, 14, 18, 19) is fixed to or integrated with the plate (1, 14, 18, 19); and that a free edge of the part (2) of each flange of the plate (1, 14, 18, 19) is placed in a vertical plane adjacent but inside the edges of the plate (1, 14, 18, 19).

4. The cover means of claim 3, **characterized in that** a bolt connection (4) or a bolt (17) is arranged in the middle of the plate (1, 14, 18, 19), at the same side as the flanges (2, 3).

5. The cover means of claim 4, **characterized in that** the locking means is L-shaped having one part (8) slightly longer than the other part (7), whereby the longer part (8) forms projecting free ends (12), that the longer part (8) has an opening (6) approximately in the middle and that the projecting free ends (12) of the locking means are to be received on top of sides (10) of the frame.

6. The cover means of claim 5, **characterized in that** it further comprises a bolt (9) to be received in the opening (6) of the locking means and in the bolt connection (4) of the plate (1) or comprises a nut (16) to be received on the bolt (17) arranged in the middle of the plate (14, 18, 19) after that the opening (6) of the locking means has been received on said bolt (17).

7. The cover means of any of the previous claims, **characterized in that** the plate (1, 14, 18, 19) has an approximately rectangular shape.

8. The cover means of claim 2, **characterized in that** the sealing means (5) is made of a conductive material.

9. The cover means of claim 2, **characterized in that** a layer of fire insulation (15) is placed between the plate (14) and the locking means (7, 8).

10. The cover means of claim 9, **characterized in that** the layer of fire insulation (15) is fixed to the inside of the plate (14) or the flanges (2, 3) of the plate (14).

11. The cover means of claim 2, **characterized in that** the plate (18, 19) is ventilated and having one or more parts of slats (20) partly covering ventilation openings of the plate (18, 19).

12. The cover of claim 11, **characterized in that** a net hindering entrance for insects are placed covering the ventilation openings.

## Patentansprüche

1. Ein Abdeckmittel zur Aufnahme in einem Rahmen (10, 11) mit Rohrdurchführungen, Kabeldurchführungen usw., **dadurch gekennzeichnet, daß** dieses eine Platte (1, 14, 18, 19), Verriegelungselemente (7, 8) und Dichtungselemente (5) umfaßt, wobei die Verriegelungselemente (7, 8) das Abdeckmittel im Rahmen (10, 11) verriegeln, und daß die Platte (1, 14, 18, 19) auf einer Seite Führungselemente aufweist, die die Platte (1, 14, 18, 19) in Bezug auf den Rahmen (10, 11) in der Weise führen, daß die Platte (1, 14, 18, 19) eine Bohrung des Rahmens (10, 11) abdeckt.

2. Das Abdeckmittel gemäß Anspruch 1, **dadurch gekennzeichnet, daß** die Dichtungselemente (5) entlang jeder Kante der Platte (1) positionierbar sind.

3. Das Abdeckmittel gemäß Anspruch 2, **dadurch gekennzeichnet, daß** die Führungselemente aus Flanschen (2, 3) bestehen, die angrenzend an und parallel mit zwei gegenüberliegenden Kanten der Platte (1) und/oder anderen Teilen, die sich in der Nähe der Ecken der Platte (1) befinden, angeordnet sind; daß jeder Flansch L-förmig ausgebildet ist, wobei ein Teil (2) parallel zur Platte (1, 14, 18, 19) liegt und ein Teil (3) senkrecht auf der Platte (1, 14, 18, 19) steht, wobei derjenige Teil (3), der senkrecht auf der Platte (1, 14, 18, 19) steht, fest verbunden mit oder integriert ist in die Platte (1, 14, 18, 19); und daß ein freier Rand des Teiles (2) jedes Flansches der Platte (1, 14, 18, 19) in einer vertikalen Ebene liegt, die an die Kanten der Platte (1, 14, 18, 19) angrenzt, aber innerhalb dieser liegt.

4. Das Abdeckmittel gemäß Anspruch 3, **dadurch gekennzeichnet, daß** eine Schraubenverbindung (4) oder eine Schraube (17) in der Mitte der Platte (1, 14, 18, 19) auf der gleichen Seite wie die Flansche (2, 3) angeordnet ist.

5. Das Abdeckmittel gemäß Anspruch 4, **dadurch gekennzeichnet, daß** die Verriegelungselemente L-förmig ausgebildet sind, wobei ein Teil (8) etwas länger als der andere Teil (7) ausgebildet ist, wobei der längere Teil (8) sich nach außen erstreckende freie Enden (12) aufweist, daß der längere Teil (8) etwa in der Mitte eine Bohrung (6) aufweist und daß die sich nach außen erstreckenden freien Enden (12) der Verriegelungselemente auf oberen Kanten der Seiten (10) des Rahmens aufliegen.

6. Das Abdeckmittel gemäß Anspruch 5, **dadurch gekennzeichnet, daß** es weiterhin eine Schraube (9) umfaßt, die in der Bohrung (6) der Verriegelungselemente und in der Schraubenverbindung (4) der Platte (1) aufnehmbar ist, oder eine Mutter (16) umfaßt, die auf die Schraube (17) in der Mitte der Platte (14, 18, 19) aufdrehbar ist, nachdem die Bohrung (6) der Vorriegolungselemonte über der Schraube (17) verbracht wurde.

7. Das Abdeckmittel gemäß einem der vorhergehenden Ansprüche, **dadurch gekennzeichnet, daß** die Platte (1, 14, 18, 19) eine ungefähr rechteckige Form aufweist.

8. Das Abdeckmittel gemäß Anspruch 2, **dadurch gekennzeichnet, daß** die Dichtungselemente (5) aus einem leitfähigen Material bestehen.

9. Das Abdeckmittel gemäß Anspruch 2, **dadurch gekennzeichnet, daß** eine Schicht einer feuerhemmenden Isolierung (15) zwischen der Platte (14) und den Verriegelungselementen (7, 8) angeordnet ist.

10. Das Abdeckmittel gemäß Anspruch 9, **dadurch gekennzeichnet, daß** die Schicht der feuerhemmenden Isolierung (15) an der Innenseite der Platte (14) oder der Flansche (2, 3) der Platte (14) angeordnet ist.

11. Das Abdeckmittel gemäß Anspruch 2, **dadurch gekennzeichnet, daß** die Platte (18, 19) belüftet ist und ein oder mehrere Lamellenelemente (20) aufweist, die teilweise Lüftungsöffnungen der Platte (18, 19) abdecken.

12. Das Abdeckmittel gemäß Anspruch 11, **dadurch gekennzeichnet, daß** ein Netz, das das Eindringen von Insekten verhindert, so angeordnet ist, daß es die Lüftungsöffnungen abdeckt.

## Revendications

1. Moyen de couverture destiné à être reçu dans une armature (10, 11) maintenant des pénétrations de tuyau, des entrées de câble, etc., **caractérisé en ce qu'**il comprend une plaque (1, 14, 18, 19), des moyens de verrouillage (7, 8), lesdits moyens de verrouillage (7, 8) verrouillant le moyen de couverture sur l'armature (10, 11), et des moyens de fermeture (5) et **en ce que** la plaque (1, 14, 18, 19) comprend des moyens de guidage sur un côté, guidant la plaque (1, 14, 18, 19) par rapport à l'armature (10, 11) de telle sorte que la plaque (1, 14, 18, 19) couvre une ouverture de l'armature (10, 11).

2. Moyen de couverture selon la revendication 1, **caractérisé en ce que** le moyen de fermeture (5) doit être positionné le long de chaque bord de la plaque (1).

3. Moyen de couverture selon la revendication 2, **caractérisé en ce que** les moyens de guidage sont des brides (2, 3) disposées adjacentes et parallèles à deux bords opposés de la plaque (1) et/ou d'autres parties disposées adjacentes aux angles de la plaque (1) ; **en ce que** chaque bride est en forme de L, comprenant une partie (2) parallèle à la plaque (1, 14, 18, 19) et une partie (3) perpendiculaire à la plaque (1, 14, 18, 19), moyennant quoi la partie (3) perpendiculaire à la plaque (1, 14, 18, 19) est fixée à ou intégrée à la plaque (1, 14, 18, 19) ; et **en ce qu'**un bord libre de la partie (2) de chaque bride de la plaque (1, 14, 18, 19) est placé dans un plan vertical adjacent mais à l'intérieur des bords de la plaque (1, 14, 18, 19).

4. Moyen de couverture selon la revendication 3, **caractérisé en ce qu'**un raccord de boulon (4) ou un boulon (17) est agencé au milieu de la plaque (1, 14, 18, 19), sur le même côté que les brides (2, 3).

5. Moyen de couverture selon la revendication 4, **caractérisé en ce que** le moyen de verrouillage est en forme de L comprenant une partie (8) légèrement plus longue que l'autre partie (7), moyennant quoi la partie la plus longue (8) forme des extrémités libres saillantes (12), **en ce que** la partie plus longue (8) comprend une ouverture (6) approximativement au milieu et **en ce que** les extrémités libres saillantes (12) du moyen de verrouillage doivent être reçues au sommet des côtés (10) de l'armature.

6. Moyen de couverture selon la revendication 5, **caractérisé en ce qu'**il comprend en outre un boulon (9) qui doit être reçu dans l'ouverture (6) du moyen de verrouillage et dans le raccord de boulon (4) de la plaque (1) ou comprend un écrou (16) qui doit être reçu sur le boulon (17) agencé au milieu de la plaque (14, 18, 19) après que l'ouverture (6) du moyen de verrouillage a été reçue sur ledit boulon (17).

7. Moyen de couverture selon l'une quelconque des revendications précédentes, **caractérisé en ce que** la plaque (1, 14, 18, 19) est de forme approximativement rectangulaire.

8. Moyen de couverture selon la revendication 2, **caractérisé en ce que** le moyen de fermeture (5) est constitué d'un matériau conducteur.

9. Moyen de couverture selon la revendication 2, **caractérisé en ce qu'**une couche d'isolation anti-feu (15) est placée entre la plaque (14) et le moyen de verrouillage (7, 8).

10. Moyen de couverture selon la revendication 9, **caractérisé en ce que** la couche d'isolation anti-feu (15) est fixée à l'intérieur de la plaque (14) ou des brides (2, 3) de la plaque (14).

11. Moyen de couverture selon la revendication 2, **caractérisé en ce que** la plaque (18, 19) est ventilée et comprend une ou plusieurs parties de lamelles (20) recouvrant partiellement les ouvertures de ventilation de la plaque (18, 19).

12. Couverture selon la revendication 11, **caractérisée en ce qu'**un filet empêchant l'entrée des insectes est positionné pour recouvrir les ouvertures de ventilation.
